# EUROPEAN PATENT SPECIFICATION

(11) **EP 3 859 460 B1**
(45) Date of publication and mention of the grant of the patent: **14.09.2022**
(21) Application number: 21152250.3
(22) Date of filing: 19.01.2021
(51) Int. Cl.: G05B 17/02, B65H 23/182, B65H 23/185, G05B 19/418

(54) **MODEL GENERATION SYSTEM**
MODELLERZEUGUNGSSYSTEM
SYSTÈME DE GÉNÉRATION DE MODÈLE

(30) Priority: 28.01.2020 JP 2020011870
(43) Date of publication of application: 04.08.2021
(73) Proprietor: SUMITOMO HEAVY INDUSTRIES, LTD., Tokyo 141-6025 (JP)
(72) Inventor: HIRAYAMA, Daisuke, Yokosuka-shi, Kanagawa, 237-8555 (JP)
(74) Representative: Louis Pöhlau Lohrentz

(56) References cited:
- EP-A1- 3 270 241
- US-A1- 2009 106 002
- US-A1- 2015 106 075
- PEUKER T ET AL: "FLIESSSCHEMA-SIMULATION - EIN NEUES HILFMITTEL ZUR AUSLEGUNG VON WALZWERKEN", STAHL UND EISEN,, vol. 119, no. 6/07, 7 June 1999 (1999-06-07), pages 155-161, 239, XP000853048, ISSN: 0340-4803

## Description

### BACKGROUND OF THE INVENTION

### Field of the Invention

The present invention relates to a model generation system, and particularly to a model generation system used to generate a control program of a roll-to-roll transfer system.

### Description of Related Art

In a roll-to-roll transfer system, a long object (web) such as paper, film, or metal foil is unwound from a roll and is moved through a roller, and various kinds of processing are performed on the web on a movement path thereof (for example, Japanese Unexamined Patent Publication No. 2017-170724) . In general, the web is transferred in a state where tension set as a production condition is applied to the web such that the web does not sag on the movement path and processing is easily performed. In order to achieve this, a web processing system includes a dancer unit, and applies the set tension to the web using the dancer unit.

The document: PEUKER T ET AL: "FLIESSSCHEMA-SIMULATION - EIN NEUES HILFMITTEL ZUR AUSLEGUNG VON WALZWERKEN",STAHL UND EISEN,, vol. 119, no. 6/07, 7 June 1999 (1999-06-07), pages 155-161, 239,describes a simulation system.

### SUMMARY OF THE INVENTION

In a roll-to-roll transfer system, various units are disposed between an unwinding unit and a winding unit. Since the units to be used differ depending on the application of the roll-to-roll transfer system, production conditions, and the like, there are innumerable unit configurations of the roll-to-roll transfer system.

In a case where the roll-to-roll transfer system is introduced, the units of the roll-to-roll transfer system are designed and installed in accordance with the application, the production conditions, and the like, and a control program dedicated to the installed system is created. Since the control program differs depending on the configurations of the units of the roll-to-roll transfer system, actually, it is necessary to create a new control program every time a roll-to-roll transfer system is constructed.

In order to solve the above-described problem, a transfer system control program generation apparatus according to independent claim 1 and a transfer system control program generation method according to independent claim 3 are provided

According to the invention, a model for a control program is generated.

### BRIEF DESCRIPTION OF THE DRAWINGS

Fig. 1 is a schematic view illustrating a configuration of a roll-to-roll transfer system.
Fig. 2 is a block diagram illustrating a configuration of a model generation system according to an embodiment.
Fig. 3 illustrates a screen displayed on a monitor.
Fig. 4 illustrates a screen displayed on the monitor.
Fig. 5 illustrates a screen displayed on the monitor.
Fig. 6 illustrates a screen displayed on the monitor.

### DETAILED DESCRIPTION OF THE INVENTION

Hereinafter, the present invention will be described based on preferred embodiments with reference to the drawings. The same or equivalent components, members, and processes illustrated in the drawings are denoted by the same reference numerals, and repeated description will be appropriately omitted. The embodiments do not limit the invention, and are merely examples, not all features and combinations thereof described in the embodiments are necessarily essential to the invention.

In order to clarify the significance of the model generation system according to the embodiment, a general roll-to-roll transfer system will be described first.

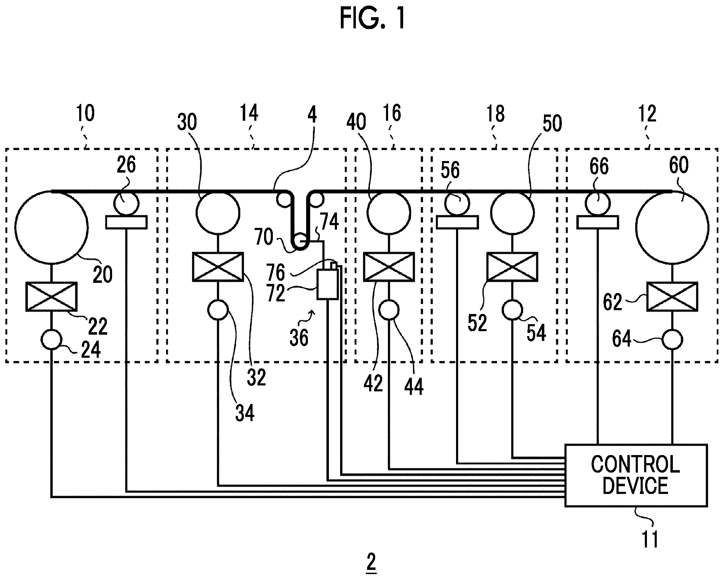

Fig. 1 is a schematic view illustrating a configuration of a roll-to-roll transfer system (hereinafter, simply referred to as a transfer system) 2 according to an embodiment. The transfer system 2 includes an unwinding unit 10 that unwinds a web 4, a first feed unit 14, a second feed unit 16, and a third feed unit 18 which transfer the unwound web 4, a winding unit 12 that winds the web 4, and a control device 11 that control these units.

The web 4 is a band-shaped or sheet-shaped base material such as paper or film, and is continuously present along the movement path. A predetermined process is performed on the web 4 on the movement path. The predetermined process may be a processing process such as printing processing, stretching processing, molding processing, coating processing, laminating processing, or slit processing, or may be a process of winding the web 4 from a large unwinding roll to a plurality of small winding rolls. The web 4 is transferred in a state where tension set as a production condition is applied to the web 4 such that the web 4 does not sag on the movement path and processing is easily performed.

The unwinding unit 10 includes an unwinding roll 20, a gear 22, a motor 24, and a tension detector 26. The motor 24 rotates the unwinding roll 20 via the gear 22. The unwinding roll 20 gives a speed according to a rotating speed and a diameter of the unwinding roll 20, to the web 4 to be unwound from the unwinding roll 20.

The tension detector 26 is configured to detect the tension of the web 4 unwound from the unwinding roll 20, that is, the tension of the web 4 between the unwinding roll 20 and a feed roller 30 (described later) . The control device 11 controls the speed of the motor 24, and thus a speed difference between the motor 24 and a motor 34 (described later) so that the tension of the web 4 between the unwinding roll 20 and the feed roller 30 is maintained at a predetermined target value.

The first feed unit 14 includes the feed roller 30, a gear 32, the motor 34, and a dancer mechanism 36. The motor 34 rotates the feed roller 30 via the gear 32. The feed roller 30 gives a speed according to the rotating speed and the diameter thereof, to the web 4.

The dancer mechanism 36 is provided on a downstream side of the feed roller 30, in the movement path of the web 4. The dancer mechanism 36 includes a dancer roller 70, an actuator 72, and a sensor 76. The dancer roller 70 is not particularly limited, but is supported to be movable in an up-down direction in this embodiment. The actuator 72 applies thrust to the dancer roller 70. The actuator 72 in this embodiment has a rod 74 connected to the dancer roller 70, and applies thrust to the dancer roller 70 via the rod 74. The dancer roller 70 that has received thrust presses the web 4. Thereby, the tension is applied to the web 4. The control device 11 controls the actuator 72 so that the tension of the web 4 between the feed roller 30 and a feed roller 40 is maintained at a predetermined target value.

The sensor 76 detects the position of the dancer roller 70. The sensor 76 in this embodiment detects the position of the dancer roller 70 by detecting the position of the rod 74. The sensor 76 outputs a detection value indicating the position of the dancer roller 70 to the control device 11 at a predetermined cycle.

The second feed unit 16 includes the feed roller 40, a gear 42, and a motor 44. The motor 44 rotates the feed roller 40 via the gear 42. The feed roller 40 gives a speed according to the rotating speed and the diameter thereof, to the web 4. In this example, the second feed unit 16 is a speed reference unit. Accordingly, the control device 11 rotates the motor 44 and thus the feed roller 40 at a constant reference speed.

The third feed unit 18 includes a feed roller 50, a gear 52, a motor 54, and a tension detector 56. The motor 54 rotates the feed roller 50 via the gear 52. The feed roller 50 gives a speed according to the rotating speed and the diameter thereof, to the web 4. The tension detector 56 is configured to detect the tension of the web 4 between the feed roller 40 and the feed roller 50. The control device 11 controls the speed of the motor 54, and thus a speed difference between the motor 54 and the motor 44 so that the tension of the web 4 between the feed roller 40 and the feed roller 50 is maintained at a predetermined target value.

The winding unit 12 includes a winding roll 60, a gear 62, a motor 64, and a tension detector 66. The tension detector 66 is configured to detect the tension of the web 4 between the feed roller 50 and the winding roll 60. The motor 64 rotates the winding roll 60 via the gear 62. The winding roll 60 winds up the web 4. The control device 11 controls the speed of the motor 64, and thus a speed difference between the motor 64 and the motor 54 so that the tension of the web 4 between the feed roller 50 and the winding roll 60 is maintained at a predetermined target value.

In such a general transfer system, the number of feed units, the arrangement of feed units, the type of feed units to be used differ depending on the application of the transfer system, production conditions, and the like. In the related art, in a case where a new transfer system is introduced in a factory, the number, arrangement, and type of feed units are decided, and a control program dedicated to the transfer system is newly generated according to the decided result. On the contrary, the model generation system according to the embodiment can generate a virtual model in which a plurality of predetermined types of units are combined. In a case where a control program is newly generated, the work of generating the control program can be dramatically facilitated by using the virtual model generated in the model generation system as a basis.

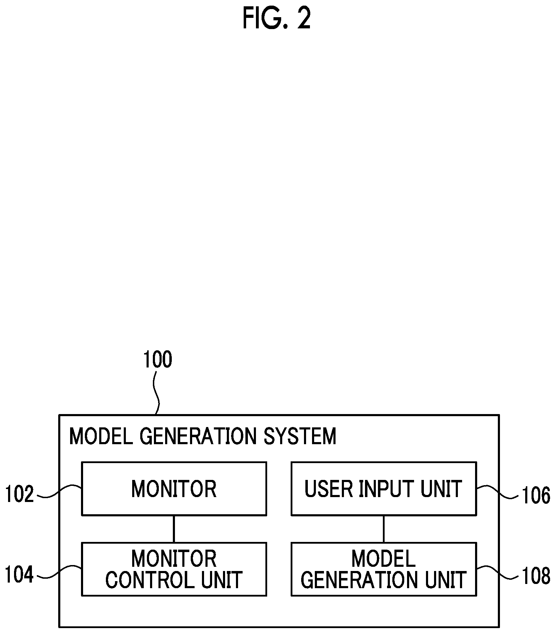

Fig. 2 is a block diagram of the model generation system according to the embodiment. Each block illustrated herein can be realized by an element such as a CPU of a computer or a machine device in terms of hardware, and is realized by a computer program or the like in terms of software, but here, the functional blocks realized by cooperation thereof are drawn. Accordingly, it is understood by those skilled in the art that the functional blocks can be realized in various forms by combining hardware and software.

A model generation system 100 includes a monitor 102, a monitor control unit 104, a user input unit 106, a model generation unit 108. The monitor 102 and the user input unit 106 may be an integrated user interface such as a touch screen. The monitor control unit 104 controls the monitor 102 to display a predetermined screen on the monitor 102. An input result of the user input unit is input to the model generation unit 108.

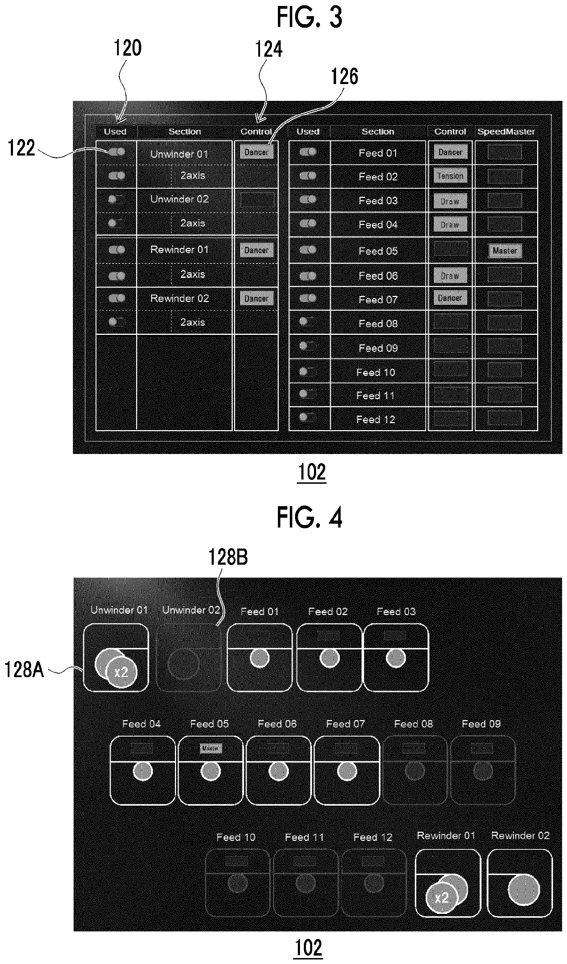

Fig. 3 illustrates an operation setting area and a control mode selection area displayed on the monitor 102. In the drawing, in a field of "Section", the name of each unit is described. In the drawing, a unit referred to as "Unwinder" corresponds to the unwinding unit, and a unit referred to as "Rewinder" corresponds to the winding unit. In this system, a virtual model including up to two unwinding units and up to two winding units can be generated. The number of unwinding units and winding units may be any number. A unit referred to as "Feed" corresponds to the feed unit described above. In this system, a virtual model including up to 12 feed units can be generated. The number of feed units may be any number.

In an operation setting area 120, a switching tab 122 that can be switched on or off is displayed for each of 16 units in total. The number of units is changed by operating the switching tab 122 of the operation setting area 120. That is, by turning off the switching tab 122, the unit is treated to be not present on the virtual model. In a case where the model generation system 100 is actually used, a user operates each switching tab 122 according to the units of the transfer system on the basis of the design drawing of the transfer system or the unit configuration of the actual machine. In a case where a control program of a transfer system including one unwinding unit, seven feed units, and two winding units is generated, "Unwinder 01", "Feed 01" to "Feed 07", "Rewinder 01", and "Rewinder 02" are turned on as illustrated in the drawing.

In a control mode selection area 124, there is a menu 126 for selecting a control mode for each feed unit. As the control mode for the feed unit, there are tension control by a dancer, feedback-control by a tension detector, and draw control by a difference in material feed rate. For each unit, the user can select a control mode for the unit. In the illustrated example, the feed unit "Feed 01" and the feed unit "Feed 07" perform the tension control by the dancer, and the feed unit "Feed 02" performs the feedback-control by the tension detector. The feed units "Feed 03", "Feed 04", and "Feed 06" perform the draw control. The control mode also includes control of the feed rate of the entire transfer system. In the illustrated example, the feed unit "Feed 05" is selected to perform control of the feed rate of the entire transfer system. In a case where the input of the operation setting area 120 and the control mode selection area 124 on the screen of Fig. 3 is completed, the monitor control unit 104 displays the screen of Fig. 4 on the monitor on the basis of the input contents.

On the screen of Fig. 4, units that are turned on and units that are turned off can be visually distinguished. An icon 128A for the unit that is turned on is emphasized, and an icon 128B corresponding to the unit that is turned off is dimmed. In a case where the icon 128A for the unit that is turned on is selected, the monitor control unit 104 displays, on the monitor 102, a screen for inputting the setting value for the corresponding unit.

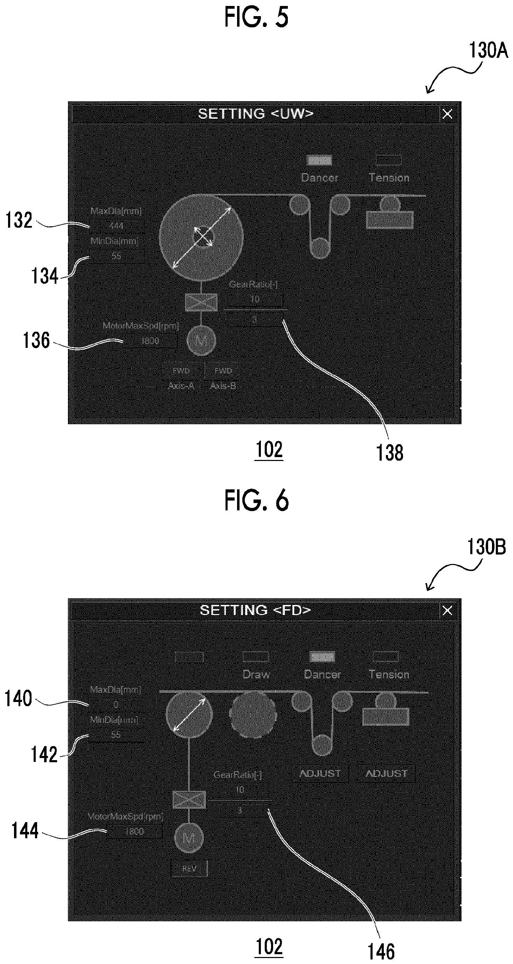

Fig. 5 illustrates a screen including a setting value input area for the unwinding unit, and Fig. 6 illustrates a screen including a setting value input area for the feed unit. The setting value is a value indicating physical characteristics of each unit, and includes characteristics such as a roll diameter, a motor drive speed, a gear ratio, and the like. The setting value is input on the basis of the parameter of the actual machine. As illustrated in Fig. 5, a setting value input area 130A for the unwinding unit includes an area 132 where the maximum diameter of the web wound around the unwinding roll is input, an area 134 where the minimum diameter of the web (diameter of the unwinding roll) is input, an area 136 where the maximum rotating speed of the motor is input, and an area 138 where the gear ratio is input. The setting value input area for the winding unit is the same as the setting value input area for the unwinding unit. As illustrated in Fig. 6, a setting value input area 130B for the feed unit includes an area 140 where the maximum diameter of the feed roller is input, an area 142 where the minimum diameter of the feed roller is input, an area 144 where the maximum rotating speed of the motor is input, and an area 146 where the gear ratio is input. In a case where each setting value is input, the monitor control unit 104 displays the screen of Fig. 4 on the monitor 102 again so that the setting values of other units can be input.

The information input via the user input unit 106 is supplied to the model generation unit 108. The model generation unit 108 generates a virtual model based on the input information. According to the example described above, the model generation unit 108 generates a virtual model for the transfer system including one unwinding unit, seven feed units, and two winding units. Further, in the virtual model, information regarding the control mode and the setting value of each unit is included.

With the model generation system 100 described above, a virtual model corresponding to the actual machine can be generated. For this virtual model, by specifically designating the transfer speed of each roller, the feedback value of tension, the feed rate of the web, and the like and generating a control program, it is possible to omit the processes relating to the conditions, setting values, and the like relating to the configuration of the transfer system. Further, the model generation system 100 can be used to generate control programs of many transfer systems within a range of a predetermined number of units.

The present invention has been described above on the basis of the embodiments. The embodiments are exemplifications.

### Brief Description of the Reference Symbols

100: model generation system
102: monitor
104: monitor control unit
106: user input unit
108: model generation unit
120: operation setting area
124: control mode selection area
130A, 130B: setting value input area

## Claims

1. A transfer system control program generation apparatus that generates a control program of a roll-to-roll transfer system, the transfer system control program generation apparatus comprising:
a monitor control unit (104) that displays, on a monitor (102), an operation setting area (120) for switching on or off each of a plurality of units constituting the roll-to-roll transfer system, a control mode selection area (124) for selecting a control mode for the unit that is turned on, and a setting value input area (130A, 130B) for inputting a setting value according to the selected control mode; and
a model generation unit (108) that generates a model for the control program, the model satisfying the unit turned on in the operation setting area (120), the control mode selected in the control mode selection area (124), and the setting value input in the setting value input area (130A, 130B),
wherein the control program for control is automatically generated by designating at least a transfer speed of each roller for the model generated by the model generation unit (108).

2. The transfer system control program generation apparatus according to claim 1, wherein a feedback value of tension or a feed rate of a web is designated for the generated model.

3. A transfer system control program generation method comprising:
displaying, on a monitor (102), an operation setting area (120) for switching on or off each of a plurality of units constituting a roll-to-roll transfer system, a control mode selection area (124) for selecting a control mode for the unit that is turned on, and a setting value input area (130A, 130B) for inputting a setting value according to the selected control mode;
generating a model for a control program, the model satisfying the unit turned on in the operation setting area (120), the control mode selected in the control mode selection area (124), and the setting value input in the setting value input area (130A, 130B); and
generating the control program for control by designating at least a transfer speed of each roller for the model.

## Patentansprüche

1. Vorrichtung zur Erzeugung eines Transfersystem-Steuerungsprogramms, welche ein Steuerungsprogramm eines Rolle-zu-Rolle-Transfersystems erzeugt, wobei die Vorrichtung zur Erzeugung eines Transfersystem-Steuerungsprogramms umfasst:
eine Bildschirmsteuerungseinheit (104), die einen Bedienungseinstellungsbereich (120) zum Ein- oder Ausschalten von jeder von mehreren Einheiten, die das Rolle-zu-Rolle-Transfersystem aufbauen, einen Steuerungsmodus-Auswahlbereich (124) zum Auswählen eines Steuerungsmodus für die Einheit, die eingeschaltet wird, und einen Einstellungswert-Eingabebereich (130A, 130B) zum Eingeben eines Einstellungswerts gemäß dem ausgewählten Steuerungsmodus auf einem Bildschirm (102) anzeigt; und
eine Modellerzeugungseinheit (108), die ein Modell für das Steuerungsprogramm erzeugt, wobei das Modell der in dem Bedienungseinstellungsbereich (120) eingeschalteten Einheit, dem Steuerungsmodus, der in dem Steuerungsmodus-Auswahlbereich (124) ausgewählt wird, und dem Einstellungswert, der in dem Einstellungswert-Eingabebereich (130A, 130B) eingegeben wird, genügt,
wobei das Steuerungsprogramm zur Steuerung durch Bestimmen von zumindest einer Transfergeschwindigkeit von jeder Rolle für das durch die Modellerzeugungseinheit (108) erzeugte Modell automatisch erzeugt wird.

2. Vorrichtung zur Erzeugung eines Transfersystem-Steuerungsprogramms gemäß Anspruch 1, wobei ein Rückkopplungswert von Spannung oder eine Zufuhrrate einer Bahn für das erzeugte Modell bestimmt wird.

3. Verfahren zur Erzeugung eines Transfersystem-Steuerungsprogramms, umfassend:
Anzeigen, auf einem Bildschirm (102), eines Bedienungseinstellungsbereichs (120) zum Ein- oder Ausschalten von jeder von mehreren Einheiten, die ein Rolle-zu-Rolle-Transfersystem aufbauen, eines Steuerungsmodus-Auswahlbereichs (124) zum Auswählen eines Steuerungsmodus für die Einheit, die eingeschaltet wird, und eines Einstellungswert-Eingabebereichs (130A, 130B) zum Eingeben eines Einstellungswerts gemäß dem ausgewählten Steuerungsmodus;
Erzeugen eines Modells für ein Steuerungsprogramm, wobei das Modell der in dem Bedienungseinstellungsbereich (120) eingeschalteten Einheit, dem Steuerungsmodus, der in dem Steuerungsmodus-Auswahlbereich (124) ausgewählt wird, und dem Einstellungswert, der in dem Einstellungswert-Eingabebereich (130A, 130B) eingegeben wird, genügt; und
Erzeugen des Steuerungsprogramms zur Steuerung durch Bestimmen von zumindest einer Transfergeschwindigkeit von jeder Rolle für das Modell.

## Revendications

1. Un appareil de génération de programme de commande de système de transfert qui génère un programme de commande d'un système de transfert de rouleau à rouleau, l'appareil de génération de programme de commande de système de transfert comprenant :
une unité de commande de moniteur (104) qui affiche, sur un moniteur (102), une zone de réglage de fonctionnement (120) pour mettre sous tension ou hors tension chacune d'une pluralité d'unités constituant le système de transfert de rouleau à rouleau, une zone de sélection de mode de commande (124) pour sélectionner un mode de commande pour l'unité qui est mise sous tension, et une zone de saisie de valeur de réglage (130A, 130B) pour saisir une valeur de réglage selon le mode de commande sélectionné ; et
une unité de génération de modèle (108) qui génère un modèle pour le programme de commande, le modèle satisfaisant l'unité mise sous tension dans la zone de réglage de fonctionnement (120), le mode de commande sélectionné dans la zone de sélection de mode de commande (124), et la valeur de réglage saisie dans la zone de saisie de valeur de réglage (130A, 130B) ;
dans lequel le programme de commande pour la commande est automatiquement généré en désignant au moins une vitesse de transfert de chaque rouleau pour le modèle généré par l'unité de génération de modèle (108).

2. L'appareil de génération de programme de commande de système de transfert selon la revendication 1, dans lequel une valeur de rétroaction de tension ou une vitesse d'alimentation d'une bande est désignée pour le modèle généré.

3. Une méthode de génération de programme de commande de système de transfert comprenant les étapes ci-dessous comprenant :
afficher, sur un moniteur (102), une zone de réglage de fonctionnement (120) pour mettre sous tension ou hors tension chacune d'une pluralité d'unités constituant un système de transfert de rouleau à rouleau, une zone de sélection de mode de commande (124) pour sélectionner un mode de commande pour l'unité qui est mise sous tension, et une zone de saisie de valeur de réglage (130A, 130B) pour saisir une valeur de réglage selon le mode de commande sélectionné ;
générer un modèle pour un programme de commande, le modèle satisfaisant l'unité mise sous tension dans la zone de réglage de fonctionnement (120), le mode de commande sélectionné dans la zone de sélection de mode de commande (124), et la valeur de réglage saisie dans la zone de saisie de valeur de réglage (130A, 130B) ; et
générer le programme de commande pour une commande, en désignant au moins une vitesse de transfert de chaque rouleau pour le modèle.
